# EUROPEAN PATENT APPLICATION

(11) **EP 4 246 966 A2**
(43) Date of publication of application: **20.09.2023**
(21) Application number: 23167352.6
(22) Date of filing: 08.06.2021
(51) Int. Cl.: H04N 13/305

(54) **LENTICULAR IMAGE GENERATION**

(30) Priority: 09.06.2020 US 202063036945 P
(62) Divisional of application: 21736848.9
(71) Applicant: Apple Inc., Cupertino CA 95014 (US)
(72) Inventor: BACIM DE ARAUJO E SILVA, Felipe, Cupertino, California 95014 (US); BEDARD, Noah D., Cupertino, California 95014 (US)
(74) Representative: Wardle, Callum Tarn

(57) **Abstract**

Methods and apparatus for generating images to be displayed on lenticular displays. In these methods, a fixed mesh is generated offline, and in real-time texture information is mapped to the fixed mesh. In an offline process, texture and 3D mesh information for an object is used to render UV map views for multiple viewpoints of the object, view maps are generated from display calibration data, and a lenticular to UV map is generated from the UV map views and view maps. In real-time, texture information is captured, and a composite process is performed that generates a lenticular image for multiple viewpoints by sampling pixels from the texture based on the lenticular to UV map. The lenticular image is then displayed on the lenticular display. Detected positions of persons in the environment may be used to limit the number of viewpoints that are generated during the real-time composite process.

## Description

### BACKGROUND

A lenticular display may include, but is not limited to, a display panel and a lenticular lens. The lenticular lens may be a sheet or array of magnifying lenses (also referred to as lenticules) configured so that, when the lenticular display is viewed from slightly different angles, different views of a lenticular image being displayed on the display panel are visible from different viewpoints or viewing angles in front of the display. The lenticular lens may be formed of an optical plastic or glass material. An example conventional application for lenticular lenses the lenses used in lenticular printing, where lenticular lenses are used to give an illusion of depth or to make images appear to change or move as the image is viewed from different angles.

### SUMMARY

Various embodiments of methods and apparatus for generating lenticular images to be displayed on lenticular displays are described. In these methods, instead of rendering images for multiple viewpoints, interleaving the rendered images, and displaying the interleaved images in real time as is done in conventional methods for generating lenticular images, a fixed 3D mesh is generated offline, and in real-time texture information is mapped to the fixed mesh. An offline method is described in which texture and 3D mesh information is captured for an object (e.g., a face). The captured texture and 3D mesh information is used to render UV map views for multiple viewpoints of the object. View maps (e.g., three view maps, with one view map for each subpixel) are generated from a ray tracing model and calibration data for the lenticular display. A pixel map, referred to as a lenticular to UV map, is then generated from the UV map views and the view maps and stored to memory. In real-time, texture information is captured, and a composite process is performed that generates a lenticular image for multiple viewpoints by sampling pixels from the texture based on the lenticular to UV map. The lenticular image is then displayed on the lenticular display.

In some embodiments, a system may be configured to detect position of one or more persons in the environment based on information captured by one or more sensors, and use that position information to limit the number of viewpoints that are generated during the real-time composite process.

An example application of the methods and apparatus for generating images to be displayed on lenticular displays is in head-mounted device (HMDs)) such as those used in computer-generated reality (CGR) systems. An HMD may include an opaque user-facing display on which CGR content is displayed for viewing by the user, as well as an external lenticular display for displaying a virtual view of the user's face that can be viewed from different viewpoints. The offline method described above may be used to generate lenticular to UV map(s) for the user's face, and the real-time method described above may then be used to generate lenticular images for the lenticular display based on dynamic texture information and the pre-generated lenticular to UV map(s).

### BRIEF DESCRIPTION OF THE DRAWINGS

FIGS. 1A and 1B illustrate an example lenticular display, according to some embodiments.
FIG. 1C illustrates an example device that includes a lenticular display, according to some embodiments.
FIGS. 2A and 2B illustrate an example device that includes a lenticular display, according to some embodiments.
FIG. 3 graphically illustrates a conventional method for rendering an image with a fixed viewpoint.
FIG. 4 graphically illustrates a conventional method for rendering an interleaved image for a lenticular display.
FIG. 5 graphically illustrates a method for offline generation of a lenticular to UV map, according to some embodiments.
FIG. 6 graphically illustrates a real-time method for generating an interleaved image for a lenticular display based on dynamically captured texture information and a pre-generated lenticular to UV map, according to some embodiments.
FIG. 7 graphically illustrates a real-time method for generating an interleaved image for a lenticular display based on dynamically captured texture information, a pre-generated lenticular to UV map, and tracking information, according to some embodiments.
FIG. 8 is a high-level flowchart of a fixed mesh, dynamic texture lenticular image generation method, according to some embodiments.
FIG. 9 is a flowchart of a method for offline generation of a lenticular to UV map, according to some embodiments.
FIG. 10 is a flowchart of a real-time method for generating an interleaved image for a lenticular display based on dynamically captured texture information and s pre-generated lenticular to UV map, according to some embodiments.
FIG. 11 is a flowchart of a method for responding to detected movement of an HMD, according to some embodiments.
FIG. 12 is a flowchart of an alternative method for responding to detected movement of an HMD, according to some embodiments.

This specification includes references to "one embodiment" or "an embodiment." The appearances of the phrases "in one embodiment" or "in an embodiment" do not necessarily refer to the same embodiment. Particular features, structures, or characteristics may be combined in any suitable manner consistent with this disclosure.

"Comprising." This term is open-ended. As used in the claims, this term does not foreclose additional structure or steps. Consider a claim that recites: "An apparatus comprising one or more processor units ...." Such a claim does not foreclose the apparatus from including additional components (e.g., a network interface unit, graphics circuitry, etc.).

"Configured To." Various units, circuits, or other components may be described or claimed as "configured to" perform a task or tasks. In such contexts, "configured to" is used to connote structure by indicating that the units/circuits/components include structure (e.g., circuitry) that performs those task or tasks during operation. As such, the unit/circuit/component can be said to be configured to perform the task even when the specified unit/circuit/component is not currently operational (e.g., is not on). The units/circuits/components used with the "configured to" language include hardware - for example, circuits, memory storing program instructions executable to implement the operation, etc. Reciting that a unit/circuit/component is "configured to" perform one or more tasks is expressly intended not to invoke 35 U.S.C. § 112, paragraph (f), for that unit/circuit/component. Additionally, "configured to" can include generic structure (e.g., generic circuitry) that is manipulated by software or firmware (e.g., an FPGA or a general-purpose processor executing software) to operate in manner that is capable of performing the task(s) at issue. "Configure to" may also include adapting a manufacturing process (e.g., a semiconductor fabrication facility) to fabricate devices (e.g., integrated circuits) that are adapted to implement or perform one or more tasks.

"First," "Second," etc. As used herein, these terms are used as labels for nouns that they precede, and do not imply any type of ordering (e.g., spatial, temporal, logical, etc.). For example, a buffer circuit may be described herein as performing write operations for "first" and "second" values. The terms "first" and "second" do not necessarily imply that the first value must be written before the second value.

"Based On" or "Dependent On." As used herein, these terms are used to describe one or more factors that affect a determination. These terms do not foreclose additional factors that may affect a determination. That is, a determination may be solely based on those factors or based, at least in part, on those factors. Consider the phrase "determine A based on B." While in this case, B is a factor that affects the determination of A, such a phrase does not foreclose the determination of A from also being based on C. In other instances, A may be determined based solely on B.

"Or." When used in the claims, the term "or" is used as an inclusive or and not as an exclusive or. For example, the phrase "at least one of x, y, or z" means any one of x, y, and z, as well as any combination thereof.

### DETAILED DESCRIPTION

Various embodiments of methods and apparatus for generating images to be displayed on lenticular displays are described. In these methods, instead of rendering images for multiple viewpoints, interleaving the rendered images, and displaying the interleaved images in real time as is done in conventional methods for generating lenticular images, a fixed mesh is generated offline, and in real-time texture information is mapped to the fixed mesh. An offline method is described in which texture and 3D mesh information is obtained for an object (e.g., a user's face), for example via one or more sensors of a device such as a head-mounted display (HMD). The texture and mesh information is used to render UV map views for multiple viewpoints of the object. Broadly defined, a UV map is a flat representation of the surface of a 3D model. View maps (e.g., three view maps, with one view map for each subpixel) are generated from a ray tracing model and calibration data for the lenticular display. A pixel map, referred to as a lenticular to UV map, is then generated from the UV map views and the view maps and stored to memory. In real-time, texture information is captured, and a composite component performs a composite process that generates a lenticular image for multiple viewpoints by sampling pixels from the texture based on the lenticular to UV map. The lenticular image is then displayed on the lenticular display.

The device may also include one or more sensors that may be used to capture information, including but not limited to video and depth information, about the environment. In some embodiments, the device may be configured to detect position of one or more persons in the environment based on information captured by the sensors, and use that position information to limit the number of viewpoints that are composited during the real-time composite process.

An example application of the methods and apparatus for generating images to be displayed on lenticular displays described herein is in computer-generated reality (CGR) systems. A CGR system may include a wearable device such as a headset, helmet, goggles, or glasses (referred to herein as a head-mounted device (HMD)). An HMD may include an opaque user-facing display on which CGR content is displayed for viewing by the user. The HMD may also include an external lenticular display for displaying a virtual representation of the user's face that can be viewed from different viewpoints. The HMD may also include one or more user-facing sensors that may be used to obtain texture and 3D mesh information for the user's face and eyes. An offline method as described herein may be used to generate a lenticular to UV map for the user's face. A real-time method as described herein may then be used to generate lenticular images for the lenticular display based on dynamic texture information capture by the user-facing sensors and the pre-generated lenticular to UV map. The offline and real-time methods may be performed by a controller of the CGR system that includes one or more processors. The lenticular to UV map may be stored in memory of the CGR system for access by the controller when performing the composite. In some embodiments, the CGR system may be configured to detect position of one or more persons in the environment based on information captured by world-facing sensors of the HMD (also referred to as environment sensors), and use that position information to limit the number of viewpoints that are composited during the real-time composite process.

In practice, an HMD may shift or be moved during use when the real-time process is generating virtual views of the user's face. Since the lenticular to UV map generated in the offline process is fixed, this movement may result in misalignment of the virtual face displayed on the lenticular display and the user's real face. In some embodiments, to address this misalignment, a lenticular to UV map of the user's face may be generated during the offline process that is larger than a region or "window" of the face that is displayed on the lenticular display during the real-time process. If movement of the HMD is detected during the real-time process, the window may be moved within the lenticular to UV map based on the detected movement. In some embodiments, as an alternative, the offline process may be repeated upon detecting movement of the HMD on the user's head. In some embodiments, the offline process may be periodically performed during real-time use of the HMD, for example once every few minutes, to re-calibrate alignment of the virtual face displayed on the lenticular display and the user's real face.

While embodiments of the methods and apparatus for generating images to be displayed on lenticular displays are generally described with respect to front-facing lenticular displays for displaying virtual views of a user's face in devices such as HMDs, embodiments may also be applied to or adapted for use in other systems and devices that include lenticular displays.

A physical environment refers to a physical world that someone may interact with and/or sense without the use of electronic devices. The physical environment may include physical features such as a physical object or physical surface. For example, a physical environment may include a physical city that includes physical buildings, physical streets, physical trees, and physical people. People may directly interact with and/or sense the physical environment through, for example, touch, sight, taste, hearing, and smell. An extended reality (XR) environment, on the other hand, refers to a wholly or partially simulated environment that someone may interact with and/or sense using an electronic device. For example, an XR environment may include virtual reality (VR) content, augmented reality (AR) content, mixed reality (MR) content, or the like. Using an XR system, a portion of a person's physical motions, or representations thereof, may be tracked. In response, one or more characteristics of a virtual object simulated in the XR environment may be adjusted such that it adheres to one or more laws of physics. For example, the XR system may detect a user's movement and, in response, adjust graphical and auditory content presented to the user in a way similar to how views and sounds would change in a physical environment. In another example, the XR system may detect movement of an electronic device presenting an XR environment (e.g., a laptop, a mobile phone, a tablet, or the like) and, in response, adjust graphical and auditory content presented to the user in a way similar to how views and sounds would change in a physical environment. In some situations, the XR system may adjust one or more characteristics of graphical content in the XR environment responsive to a representation of a physical motion (e.g., a vocal command).

Various electronic systems enable one to interact with and/or sense XR environments. For example, projection-based systems, head-mountable systems, heads-up displays (HUDs), windows having integrated displays, vehicle windshields having integrated displays, displays designed to be placed on a user's eyes (e.g., similar to contact lenses), speaker arrays, headphones/earphones, input systems (e.g., wearable or handheld controllers with or without haptic feedback), tablets, smartphones, and desktop/laptop computers may be used. A head-mountable system may include an integrated opaque display and one or more speakers. In other examples, a head-mountable system may accept an external device having an opaque display (e.g., a smartphone). The head-mountable system may include one or more image sensors and/or one or more microphones to capture images or video and/or audio of the physical environment. In other examples, a head-mountable system may include a transparent or translucent display. A medium through which light representative of images is directed may be included within the transparent or translucent display. The display may utilize OLEDs, LEDs, uLEDs, digital light projection, laser scanning light source, liquid crystal on silicon, or any combination of these technologies. The medium may be a hologram medium, an optical combiner, an optical waveguide, an optical reflector, or a combination thereof. In some examples, the transparent or translucent display may be configured to selectively become opaque. Projection-based systems may use retinal projection technology to project graphical images onto a user's retina. Projection systems may also be configured to project virtual objects into the physical environment, for example, on a physical surface or as a hologram.

### Lenticular displays

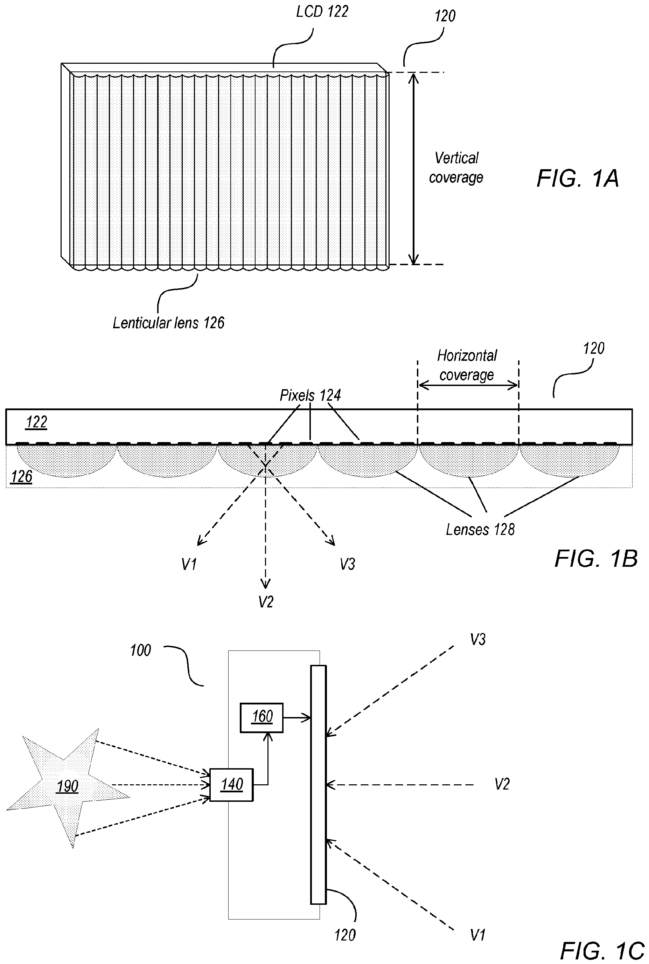

FIGS. 1A and 1B illustrate an example lenticular display 120, according to some embodiments. FIG. 1A shows a 3D front view of an example lenticular display 120, and FIG. 1B shows an example top view of the example lenticular display 120. As shown if FIG. 1A, a lenticular display 120 may include, but is not limited to, a display panel 122 (e.g., a liquid crystal display (LCD)) and a lenticular lens 126. In some embodiments other display technologies, for example organic light-emitting diode (OLED), DLP (digital light processing) or LCoS (liquid crystal on silicon) display technologies, may be used. As shown in FIGS. 1A and 1B, the lenticular lens 126 may be a sheet or array of magnifying lenses (also referred to as lenticules) 128 configured so that, when lenticular display 120 is viewed from slightly different angles, different views of a lenticular image being displayed on display panel 122 are visible from different viewpoints or viewing angles (e.g., V1, V2, and V3) in front of display 120. Lenticular lens 126 may be formed of an optical plastic or glass material. As an example, lenticular lens 126 may be an extruded plastic sheet embossed with columns of corrugations called lenticules (the lenses 128). The lenticules may all be the same size and spaced equally across the sheet. The other side of the sheet is smooth. Note that the number and shape of the lenses 128 is given by way of example, and is not intended to be limiting.

While FIGS. 1A and 1B show the lenses 128 in lenticular lens 126 as vertically arranged lenses, in some embodiments the lenses 128 may be slightly slanted to reduce resolution loss. While FIG. 1B shows three viewing angles V1, V2, and V3 for simplicity, embodiments of a lenticular display 120 may provide more viewing angles, for example 7, 10, 12, 20, 22, or more different viewing angles within a viewing radius from a leftmost viewing angle to a rightmost viewing angle. The viewing radius may, for example, be 30 degrees; however, wider or narrower viewing angles may be used, for example within a range of 15 to 65 degrees. As a non-limiting example, a lenticular display 120 may provide 22 viewing angles spread through a 30 degree viewing radius, with a different view every 1.6 degrees. In this document, the number of viewing angles provided by a lenticular display 120 is represented by N. As shown in FIG. 1B, each lens 128 may cover multiple pixels 124 of display panel 122. Each pixel 124 includes multiple subpixels (e.g., red, green, and blue subpixels). In some embodiments, each lens 128 covers N pixels on the horizontal axis, and Vp (the vertical resolution of the display panel 122) pixels on the vertical axis.

FIG. 1C shows a top view of an example device 100 that includes a lenticular display 120 as illustrated in FIGS. 1A and 1B, according to some embodiments. Device 100 may include, but is not limited to, a lenticular display 120, one or more sensors 140, and controller 160. Sensors 140 may collect information about an object 190 to be images on the lenticular display 120. Sensors 140 may include, but are not limited to, one or more cameras (e.g., RGB video cameras) that capture images (e.g., RGB images) of object 190. Sensors 140 may also include sensors that capture depth information for the object 190. Controller 160 may include one or more processors that process data captured by sensors 140 to generate texture (e.g., coloring and shading) and mesh (e.g., a 3D representation) information for object 190. From the texture and mesh information, controller 160 may generate lenticular images to be displayed on lenticular display 120. When a lenticular image is displayed by lenticular display 120, the lenticular display 120 provides N different viewing angles of a 3D virtual representation of object 190. For example, a first person can view object 190 from viewing angle V1, a second person can view object 190 from viewing angle V2, and a third person can view object 190 from viewing angle V3.

### Systems with front-facing lenticular displays

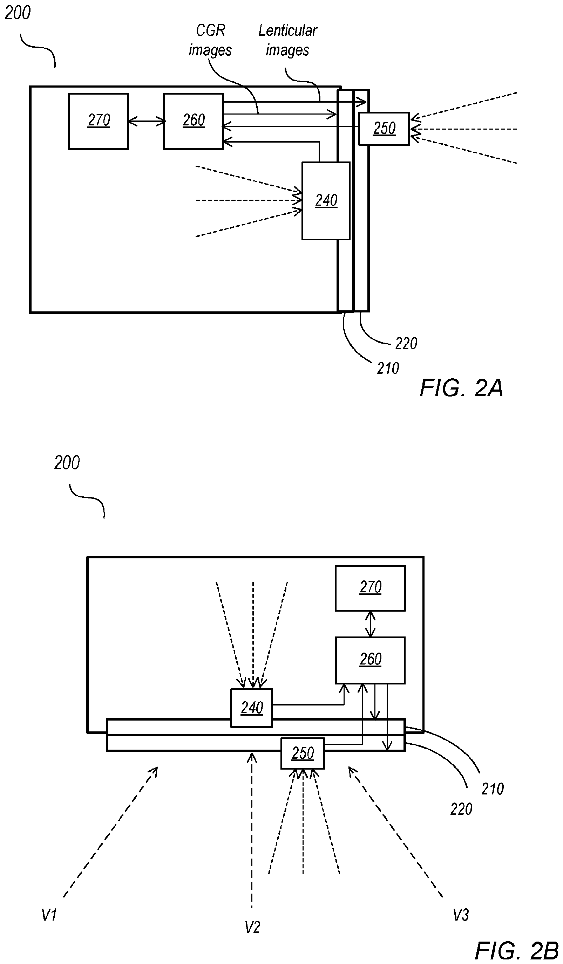

FIGS. 2A and 2B illustrate an example device that includes a user-facing display and a front-facing lenticular display, according to some embodiments. FIG. 2A shows a side view of an example device 200, and FIG. 2B shows an example top view of the example device 200. Note that device 200 as illustrated in FIGS. 2A and 2B is given by way of example, and is not intended to be limiting. In various embodiments, the shape, size, and other features of a device 200 may differ, and the locations, numbers, types, and other features of the components of a device 200 may vary.

Device 200 may include a user-facing display 210. User-facing display 210 may implement any of various types of display technologies. For example, device 200 may include a display system 210 that displays left and right images on screen(s) that are viewed by a subject, such a as DLP (digital light processing), LCD (liquid crystal display), OLED (organic light-emitting diode), or LCoS (liquid crystal on silicon) technology display system. As another example, display system 210 may be a direct retinal projector system that scans left and right images, pixel by pixel, to the subject's eyes. To scan the images, projectors generate beams that are directed to reflective components that redirect the beams to the user's eyes.

In some embodiments, device 200 may be worn on a user's head so that the display 210 is disposed in front of the user's eyes.

Device 200 may also include a world-facing display 220, mounted in front of the user-facing display 210. World-facing display 220 may be a lenticular display 220, for example as shown in FIGS. 1A and 1B, that includes a display panel (e.g., an LCD) and a lenticular lens. While embodiments are described that use LCDs, in some embodiments other display technologies, for example OLED (organic light-emitting diode), DLP (digital light processing) or LCoS (liquid crystal on silicon) display technologies, may be used.

Device 200 may also include one or more world-facing sensors 250 that collect information about the environment (video, depth information, lighting information, etc.) and one or more user-facing sensors 240 that collect information about the user (e.g., eye or gaze tracking sensors, video of various portions of the user's face). The user-facing sensors 240 may include, but are not limited to one or more eye tracking cameras (e.g., infrared (IR) cameras) that capture views of the user's eyes, and one or more cameras (e.g., RGB video cameras) that capture views of various portions of the user's face. The user-facing sensors 240 may also include sensors that capture depth information for the user's face. The world-facing sensors 250 may include, but are not limited to, one or more cameras (e.g., RGB video cameras) that capture images of the real world environment in a field of view in front of the device 200, and one or more ambient light sensors that capture lighting information for the environment. In some embodiments, the world-facing sensors 250 may also include sensors that capture depth information for objects and surfaces in the environment.

A controller 260 may be implemented in the device 200, or alternatively may be implemented at least in part by an external device (e.g., a computing system or handheld device such as a smartphone, pad, or tablet) that is communicatively coupled to device 200 via a wired or wireless interface. Controller 260 may include one or more of various types of processors, image signal processors (ISPs), graphics processing units (GPUs), coder/decoders (codecs), system on a chip (SOC), CPUs, and/or other components for processing and rendering information captured by sensors 240 and 250, including but not limited to video, images, and depth information. Controller 260 may also render frames that include virtual content based at least in part on inputs obtained from the sensors, and may provide the rendered frames to display 210.

Memory 270 may be implemented in the device 200, or alternatively may be implemented at least in part by an external device (e.g., a computing system) that is communicatively coupled to device 200 via a wired or wireless interface. Memory 270 may, for example, be used to record video or images captured by the sensors 240 and/or 250, to store program instructions that are executable by the controller 260, and to store data that are used by the controller including but not limited to pre-generated lenticular to UV maps as described herein. Memory 270 may include any type of memory, such as dynamic random access memory (DRAM), synchronous DRAM (SDRAM), double data rate (DDR, DDR2, DDR3, etc.) SDRAM (including mobile versions of the SDRAMs such as mDDR3, etc., or low power versions of the SDRAMs such as LPDDR2, etc.), RAMBUS DRAM (RDRAM), static RAM (SRAM), etc. In some embodiments, one or more memory devices may be coupled onto a circuit board to form memory modules such as single inline memory modules (SIMMs), dual inline memory modules (DIMMs), etc. Alternatively, the devices may be mounted with an integrated circuit implementing system in a chip-on-chip configuration, a package-on-package configuration, or a multi-chip module configuration.

Embodiments of a device 200 as illustrated in FIGS. 2A and 2B may, for example, be used in augmented or mixed (AR) applications to provide augmented or mixed reality views to the user. Device 200 may include one or more sensors 250 that collect information about the environment (video, depth information, lighting information, etc.); the sensors 250 may provide the collected information to controller 260 of the device 200. The sensors 250 may include one or more visible light cameras (e.g., RGB video cameras) that capture video of the environment that may be used to provide the user with a virtual view of their real environment. In some embodiments, video streams of the real environment captured by the visible light cameras may be processed by the controller 260 of the device 200 to render augmented or mixed reality frames that include virtual content overlaid on the view of the real environment, and the rendered frames may be provided to display 210.

As another example, embodiments of a device 200 as illustrated in FIGS. 2A and 2B may be used in virtual reality (VR) applications to provide virtual reality views to the user. A VR application allows users to experience and/or interact with an immersive artificial environment, such that the user feels as if they were physically in that environment. In some embodiments, the controller 260 of the device 200 may render virtual reality frames based at least in part on inputs from the world-facing 250 and user-facing 240 sensors, and the rendered frames may be provided to display 210.

Device 200 may, for example, be a head-mounted device (HMD)) such as an HMD used in computer-generated reality (CGR) systems. An HMD may include an opaque user-facing display 210 on which CGR content is displayed for viewing by the user, as well as an external lenticular display 220 for displaying lenticular images that provide a virtual view of the user's face that can be viewed from different viewpoints. When a lenticular image is displayed by lenticular display 220, the lenticular display 220 provides N different viewing angles of a 3D virtual representation of at least a portion of the user's face. For example, a first person can view the user's face from viewing angle V1, a second person can view the user's face from viewing angle V2, and a third person can view the user's face from viewing angle V3. The offline methods described herein may be used to generate a lenticular to UV map for the user's face, and the real-time methods described above may then be used to generate lenticular images for the lenticular display 220 based on dynamic texture information captured by sensors 240 and the pre-generated lenticular to UV map.

### Conventional 3D image generation

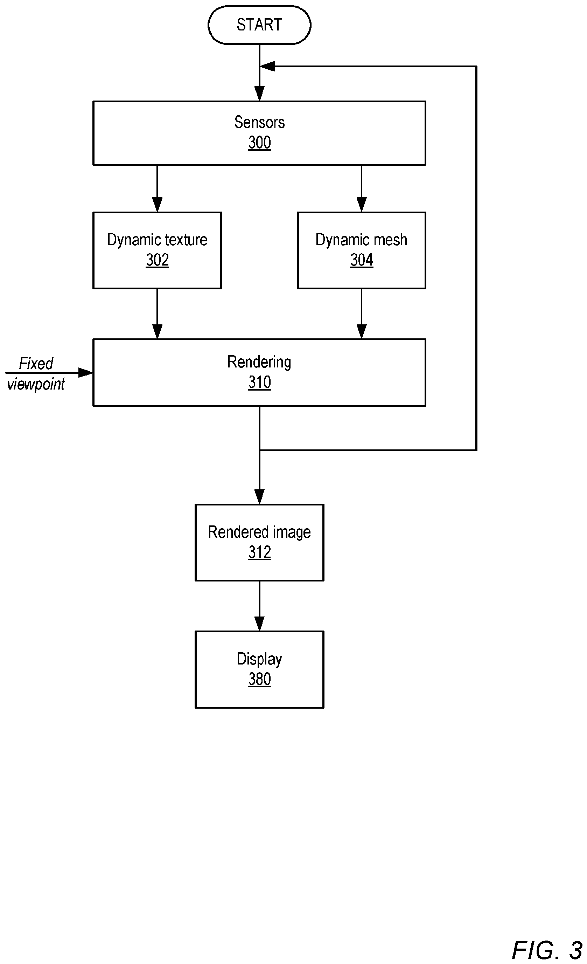

FIG. 3 graphically illustrates a conventional method for rendering a 3D image 312 of an object with a fixed viewpoint for display on a conventional (not lenticular) display 380. One or more sensors 300 may dynamically capture data about an object. The data may, for example, include 2D color image(s) captured by camera(s) and depth data captured by depth sensing technology or derived from the captured image(s). The data captured by the sensors 300 may be processed to generate information including 2D texture 302 information (e.g., coloring and shading of the object) and 3D mesh 304 information (e.g., a 3D representation or model of the object, for example a polygon mesh). A rendering 310 method may then generate a 3D rendering 312 of the object for a fixed viewpoint from the texture 302 and mesh 304 information; the rendered image 312 may then be provided to display 380. As indicated by the arrow returning from element 310 to element 300, the method may operate at a frame rate, for example 60 frames per second, to capture data, render, and display 3D renderings 312 of the object.

In some embodiments, rendering 310 may implement a UV mapping or "texturing" method to map the 2D texture 302 to a 3D model of the object. UV mapping is a 3D modelling process that projects 2D texture information to a 3D model's surface. "UV" refer to the axes of the 2D texture; X, Y, and Z denote the axes of the 3D object in model space. A UV mapping method may generate and use a 2D UV texture map (also referred to as a UV map) that maps 2D (U, V) coordinates of the texture 302 to 3D (X, Y, Z) coordinates of the 3D model to project the 2D texture 304 information on to the 3D model.

A problem with the conventional method of FIG. 3 is that, since a 3D rendered image 312 is generated for only one fixed viewpoint, for example a viewpoint directly in front of display 380, the 3D rendering 312 of the object may appear correct from that fixed viewpoint, but may appear distorted from other viewing angles in front of the display, for example from viewpoints to the left or right of the center of the display. Thus, lenticular displays as shown in FIGS. 1A through 2B and lenticular image rendering methods as described below may be used to provide correct 3D views of an object (for example, of a person's face) from multiple viewpoints in front of a lenticular display.

### Lenticular image generation methods

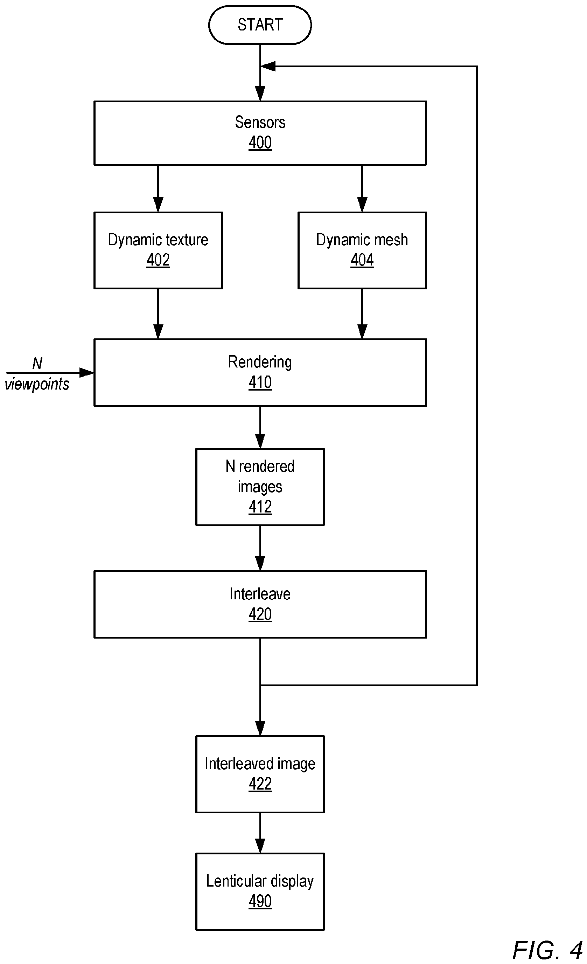

FIGS. 4 through 9 illustrate methods for generating lenticular images of a three-dimensional (3D) object such as a face for display on lenticular displays.

FIG. 4 graphically illustrates a conventional method for rendering an interleaved image 422 for a lenticular display 490. One or more sensors 400 may dynamically capture data about an object. The data may, for example, include 2D color image(s) captured by camera(s) and depth data captured by depth sensing technology or derived from the captured image(s). The data captured by the sensors 400 may be processed to generate information including 2D texture 402 information (e.g., coloring and shading of the object) and 3D mesh 404 information (e.g., a 3D representation or model of the object, for example a polygon mesh). A rendering 410 method may then generate N 3D renderings 412 of the object for N viewpoints or viewing angles from the texture 402 and mesh 404 information. Note that the 3D renderings 412 may be rendered at a reduced resolution when compared to the 3D renderings 312 described in reference to FIG. 3. The N rendered images 412 may then be interleaved 402 to generate an interleaved image 422 (also referred to as a lenticular image). The interleaved image 422 may then be provided to the display panel component of the lenticular display 490. As indicated by the arrow returning from element 420 to element 400, the method may operate at a frame rate, for example 60 frames per second, to capture data, render images 412, interleave 420 the rendered images, and display the interleaved images 422 of the object.

In some embodiments, rendering 410 may implement a UV mapping method similar to that described for FIG. 3 to map the 2D texture 402 to respective 3D models of the object to generate the N different rendered images that each represent a view of the object from a different angle. For example, lenticular display 490 may provide 22 viewing angles spread through a 30 degree viewing radius, with a different view every 1.6 degrees. The rendering 410 process may thus render 22 different views of the object, each view from a different angle, that are then interleaved 420 to generate the interleaved image 422.

An issue with the conventional method for rendering an interleaved image for a lenticular display as described in reference to FIG. 4 is that, since this method renders an image for each of the N viewpoints from dynamically generated texture and mesh information and then interleaves the N rendered images, the method is very calculation-heavy, and requires a considerable amount of computation and electrical power in real-time use of the device.

### Fixed mesh, dynamic texture lenticular image generation methods

Embodiments of fixed mesh, dynamic texture lenticular image generation methods are described that are faster and more efficient than the conventional method for generating lenticular images as described in reference to FIG. 4. Embodiments of the fixed mesh, dynamic texture lenticular image generation methods may reduce the amount of calculation, computation, and power used in real-time when compared to conventional methods.

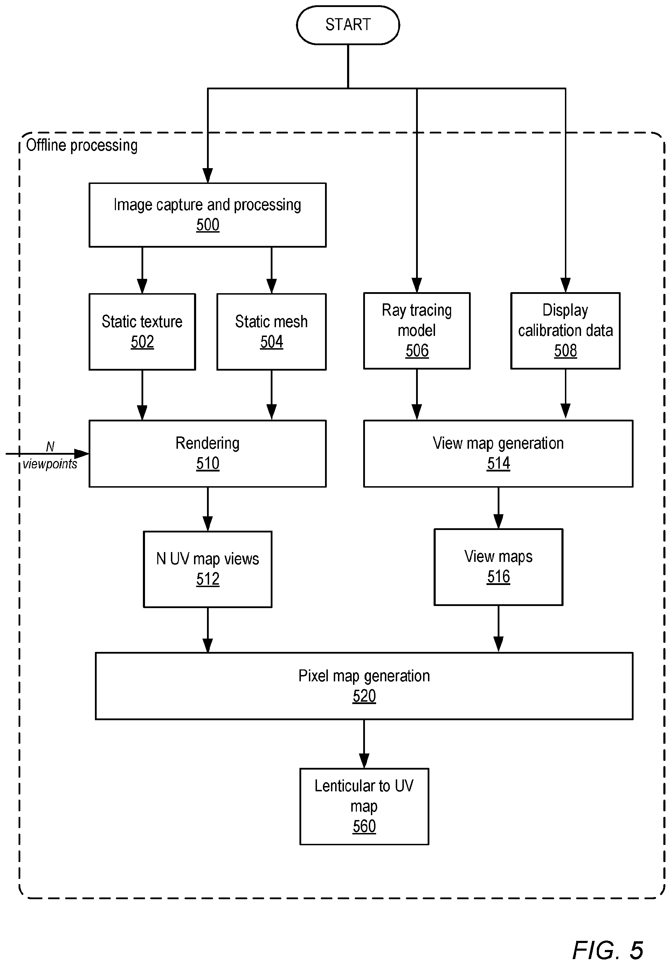

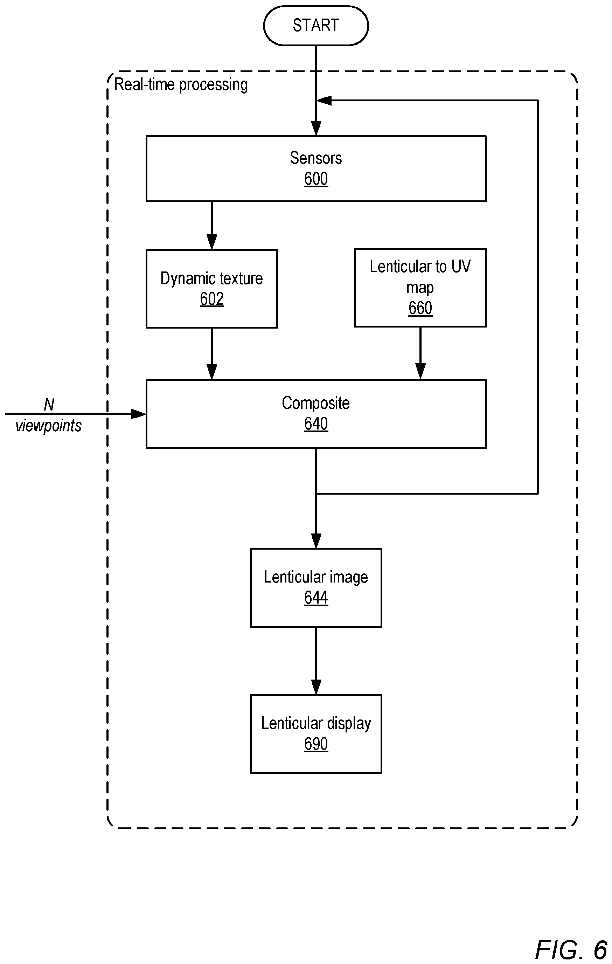

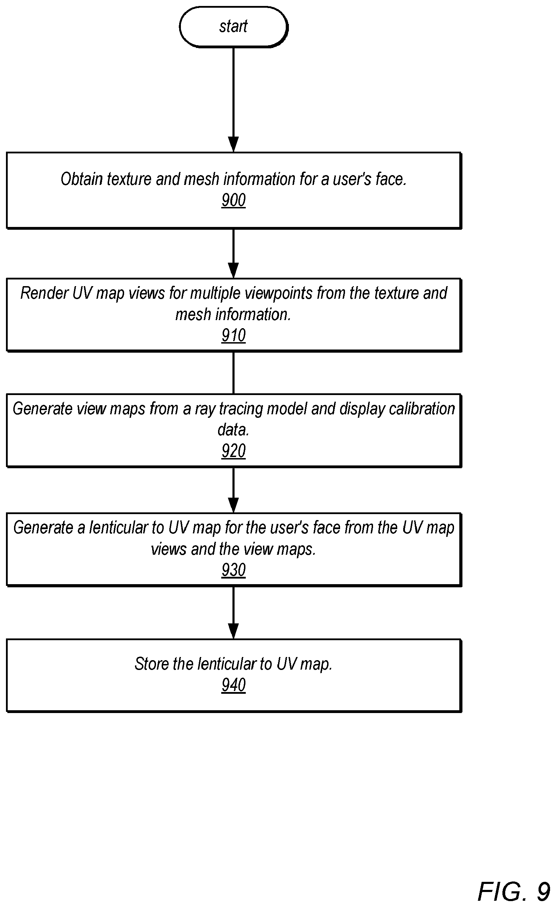

In these methods, instead of rendering images for multiple viewpoints from dynamic texture and mesh information, interleaving the rendered images, and displaying the interleaved images in real time as is done in conventional methods for generating lenticular images, a fixed mesh is generated offline, and in real-time dynamic texture information is mapped to the fixed mesh. An offline method is described in reference to FIGS. 5 and 9 in which texture and 3D mesh information is captured for an object (e.g., a user's face), for example via one or more sensors of a device as illustrated in FIGS. 2A and 2B. The captured texture and mesh information is then used to render UV map views for multiple viewpoints of the object. View maps (e.g., three view maps, with one view map for each subpixel) are generated from a ray tracing model and calibration data for the lenticular display. A pixel map, referred to as a lenticular to UV map, is then generated from the UV map views and the view maps and stored to memory. A real-time method is described in reference to FIGS. 6, 7 and 10 in which texture information is captured, and a composite process is performed that generates a lenticular image for multiple viewpoints by sampling pixels from the texture based on the pre-generated lenticular to UV map. The lenticular image is then displayed on the lenticular display. The methods as described in FIGS. 5 through 9 may, for example, be implemented by the devices as illustrated in FIGS. 1C, 2A, and 2B to generate lenticular images for lenticular displays.

FIG. 5 graphically illustrates a method for offline generation of a lenticular to UV map, according to some embodiments. In this offline method, texture 502 (e.g., an input RGB image) and 3D mesh 504 information is obtained for an object (e.g., a face). A rendering 510 process renders UV map views 512 for multiple viewpoints of the object (an individual UV map view 512 is rendered for each of the N viewing angles of the lenticular display). The UV map views 512 roughly correspond to the rendered images 412 of FIG. 4; however, the UV map views 512 are not RGB images. Instead, each pixel in a UV map views 512 contains the [x,y] coordinates in the input image (texture 502) that would be needed to get the RGB value from the input texture 502 to render an image for the respective viewing angle.

A view map generation 514 process generates view maps 516, for example three view maps, with one view map for each R, G, and B subpixel, from a ray tracing model 506 and calibration data 508 for the lenticular display. The view maps describe which of the N views should be used for each subpixel of the lenticular display.

A pixel map generation 520 process then generates a pixel map, referred to as a lenticular to UV map 560, from the UV map views 512 and the view maps 516, and stores the lenticular to UV map 560 to memory. The lenticular to UV map 560 contains a single [x,y] coordinate in the input image (texture 502) for every subpixel of the lenticular display. As long as texture 502 used in the offline process and the images of the object captured in real-time are from the same perspective, the lenticular to UV map 560 can be used to generate respective lenticular images with the same N viewpoints generated in the offline process from the images of the object captured in real-time.

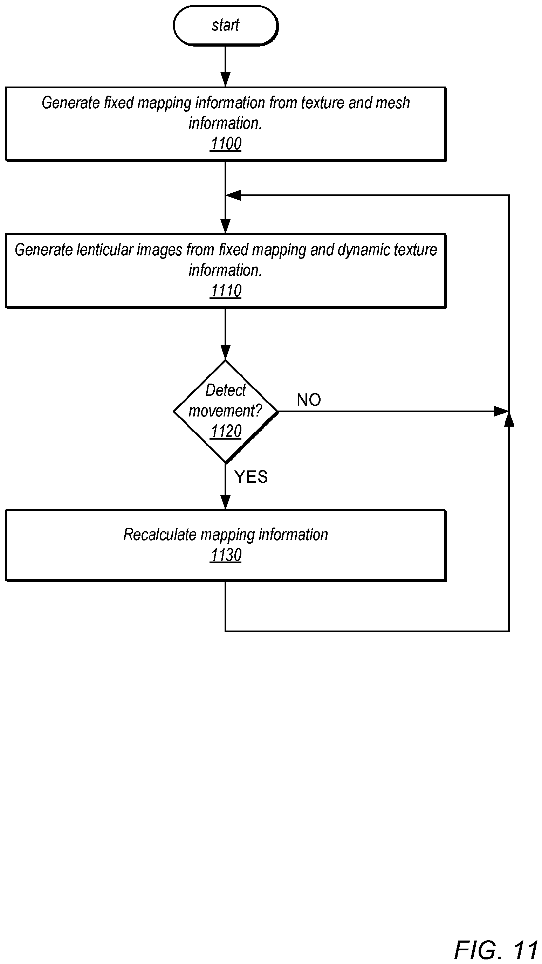

The offline method of FIG. 5 may, for example, be performed in a calibration process performed before real-time use of a device such as an HMD as illustrated in FIG 2. However, in some embodiments, the offline method of FIG. 5 may be performed at other times, for example if movement of the device (e.g., HMD) is detected during real-time use as described in reference to FIG. 11.

In the off-line method, one or more sensors may dynamically capture data about an object (e.g., a user's face). The data may, for example, include 2D color image(s) captured by camera(s) and depth data captured by depth sensing technology or derived from the captured image(s). The data captured by the sensors may be processed to generate information including 2D texture 502 information (e.g., coloring and shading of the object) and 3D mesh 504 information (e.g., a 3D representation or model of the object, for example a polygon mesh). A rendering 510 method may then generate N UV map views 512 of the object for N viewpoints or viewing angles from the texture 502 and mesh 504 information, where N is the number of viewing angles provided by the lenticular display. Note that the UV map views 512 may be rendered at a reduced resolution when compared to the 3D renderings 312 described in reference to FIG. 3. A view map generation 514 process generates view maps 516, for example three view maps, with one view map for each R, G, and B subpixel, from a ray tracing model 506 and calibration data 508 for the lenticular display. The N UV map views 512 and view maps 516 may then be passed to a pixel map generation 520 process that generates a lenticular to UV map 560 for multiple viewpoints; the lenticular to UV map 560 maps the rendered images to pixels/subpixels on the lenticular display. The lenticular to UV map 560 is stored, for example to memory of a device as illustrated in FIGS. 1C, 2A, or 2B.

FIG. 6 graphically illustrates a method for generating an interleaved image for a lenticular display in real-time based on dynamically captured texture information and a pre-generated lenticular to UV map, according to some embodiments. In the real-time method of FIG. 6, dynamic texture 602 information is captured, and a composite 640 process is performed that generates a lenticular image 644 for multiple (N, for example 22) viewpoints by sampling pixels from the dynamic texture 602 based on the pre-generated lenticular to UV map 660 that represents a "fixed mesh" of the object (e.g., of a user's face) that was generated and stored in the offline process as illustrated in FIG. 5. The lenticular image 644 is then displayed on the lenticular display 690. As indicated by the arrow returning from element 640 to element 600, the real-time method may operate at a frame rate, for example 60 frames per second, to capture dynamic texture data 602, composite 640 lenticular images 644 of the object using the fixed mesh data 660 and the dynamic texture data 602, and display the lenticular images 644 of the object.

Thus, the real-time method of FIG. 6 does not render and interleave N images to generate a lenticular image as does the conventional method of FIG. 4. Instead, the composite 640 process composites a lenticular image 644 for N viewpoints by sampling pixels from the dynamic texture 602 using the pre-generated lenticular to UV mapping information 660 generated in the off-line process of FIG. 5. The method of FIG. 6 thus reduces computation and power consumption during real-time use of the device when compared to the conventional method of FIG. 4.

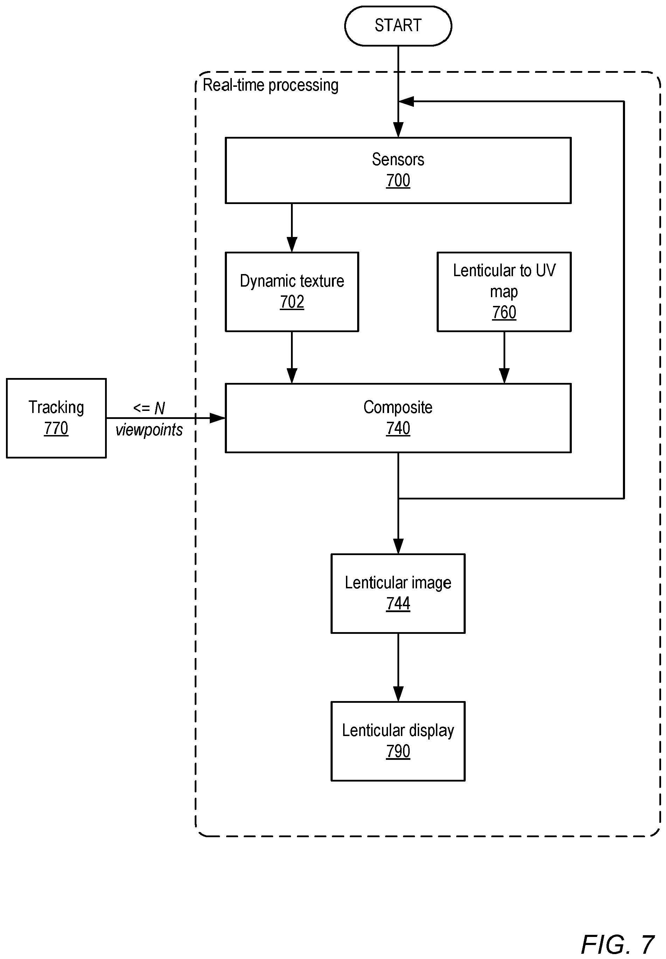

FIG. 7 graphically illustrates a real-time method for generating an interleaved image for a lenticular display based on dynamically captured texture information, a pre-generated lenticular to UV map, and tracking information, according to some embodiments. Referring to FIG. 2, a device 200 that includes a lenticular display 220 may also include world-facing sensors 250 including, but not limited to, one or more cameras (e.g., RGB video cameras) that capture images of the real world environment in a field of view in front of the device 200. In some embodiments, the world-facing sensors 250 may also include sensors that capture depth information for objects and surfaces in the environment. Information about the environment, including but not limited to video and depth information captured by sensors 250. In some embodiments, the device 200 may implement a tracking 770 process to detect and track position of one or more persons in the environment based on information captured by sensors 250. In some embodiments, that position information may be leveraged to limit the number of viewpoints that are composited during the real-time composite 740 process.

In the real-time method of FIG. 7, dynamic texture 702 information is captured, and a composite 740 process is performed to generate a lenticular image 744 by sampling pixels from the dynamic texture 602 based on the pre-generated lenticular to UV map 760 that was generated and stored in the offline process as illustrated in FIG. 5. However, instead of sampling pixels from the dynamic texture 602 for N (e.g., 22) viewpoints (N is the maximum number of viewpoints provided by the lenticular display 790), the composite 740 process obtains person tracking information (e.g., viewing angles relative to the display 790 at which persons are currently detected) from a tracking 770 process or component of the device, and composites a lenticular image 744 by sampling pixels from the dynamic texture 702 for only the viewing angles at which a person is currently located. The lenticular image 744 is then displayed on the lenticular display 790. As indicated by the arrow returning from element 740 to element 700, the real-time method may operate at a frame rate, for example 60 frames per second, to capture dynamic texture data 702, composite 640 lenticular images 644 of the object using the fixed mesh data 660, the dynamic texture data 602, and the tracking 770 data, and display the lenticular images 744 of the object.

Thus, the real-time method of FIG. 7 does not render and interleave N images to generate a lenticular image as does the conventional method of FIG. 4. Instead, the composite 740 process composites a lenticular image 744 by sampling pixels from the dynamic texture 702 for only the viewing angles at which persons are detected using the pre-generated lenticular to UV mapping information 760 generated in the off-line process of FIG. 5. The method of FIG. 7 thus reduces computation and power consumption during real-time use of the device when compared to the conventional method of FIG. 4, and may also further reduce computation and power consumption during real-time use of the device when compared to the method of FIG. 6.

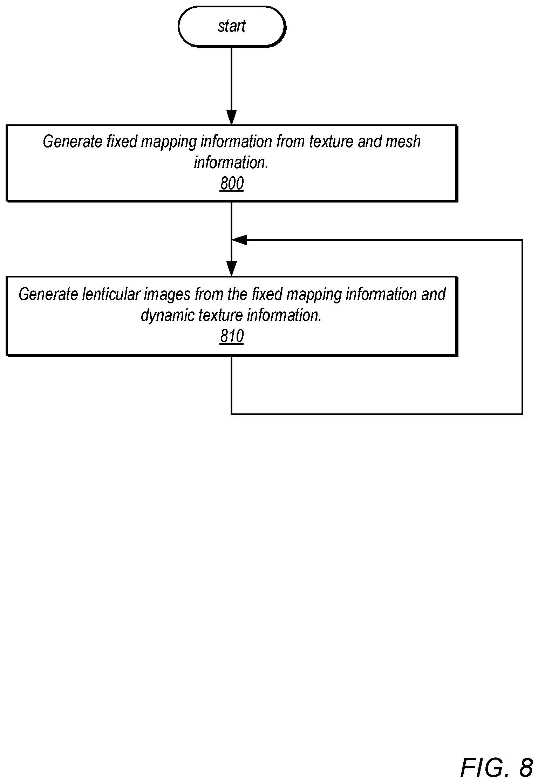

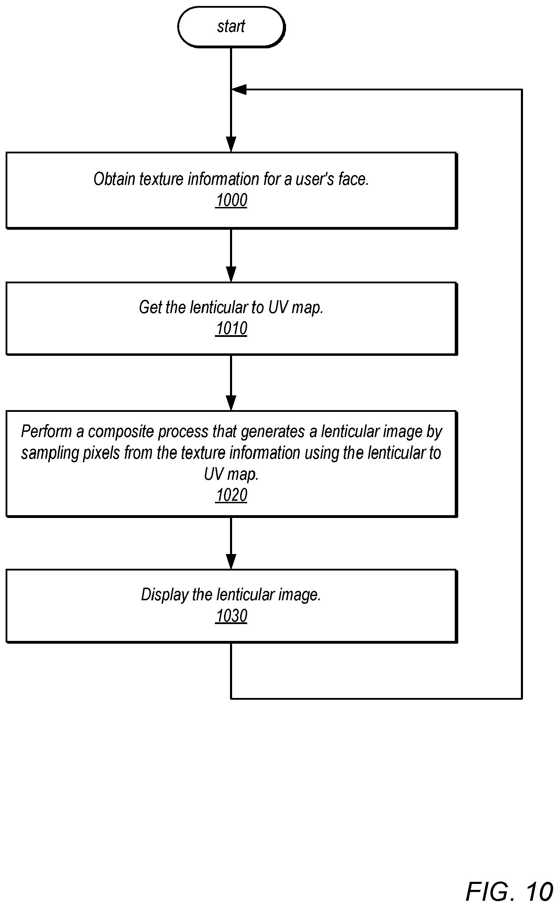

FIG. 8 is a high-level flowchart of a fixed mesh, dynamic texture lenticular image generation method, according to some embodiments. As indicated at 800, fixed mapping information is generated from captured texture and mesh information during an offline process. As indicated at 810, in a real-time process on the device, lenticular images are generated from the fixed mapping information generated by the offline process and dynamic texture information captured in the real-time process. The generated lenticular images may be displayed to a lenticular display of the device, for example a front-facing lenticular display of a HMD as illustrate in FIGS. 2A and 2B. As indicated by the arrow returning to element 810, the real-time process may continue as long as a user is using the device. FIG. 9 provides more detail for element 800 of FIG. 8, and FIG. 10 provides more detail for element 810 of FIG. 8.

FIG. 9 is a flowchart of a method for offline generation of lenticular to UV maps, according to some embodiments. The offline method of FIG. 9 may, for example, be performed in a calibration process performed before real-time use of a device such as an HMD as illustrated in FIG. 2. However, in some embodiments, the offline method of FIG. 5 may be performed at other times, for example if movement of the device (e.g., HMD) is detected during real-time use as described in reference to FIG. 11.

Referring to FIG. 9, as indicated at 900, texture and mesh information for a user's face may be obtained, for example from image and depth data captured by one or more user-facing sensors of a device as illustrated in FIG. 2. The image and depth data may, for example, include 2D color image(s) captured by camera(s) and depth data captured by depth sensing technology or derived from the captured image(s). The data captured by the user-facing sensors may be processed to generate information including 2D texture information (e.g., coloring and shading of the object) and 3D mesh information (e.g., a 3D representation or model of the object, for example a polygon mesh).

As indicated at 910, UV map views for multiple viewpoints or viewing angles may be rendered from the image and depth data. In some embodiments, a rendering method may generate N UV map views of the object for N viewpoints or viewing angles from the texture and mesh information. Each pixel in a UV map view contains the [x,y] coordinates in the input image that would be needed to get the RGB value from the input image to render an image for the respective viewing angle

As indicated at 920, view maps, for example three view maps, with one view map for each R, G, and B subpixel, are generated from a ray tracing model and calibration data for the lenticular display. The view maps describe which of the N views should be used for each subpixel of the lenticular display.

As indicated at 930, a pixel map, referred to as a lenticular to UV map, is then generated from the UV map views and the view maps. As indicated at 940, the lenticular to UV map is stored to memory. The lenticular to UV map contains a single [x,y] coordinate in the in the input image for every subpixel of the lenticular display.

FIG. 10 is a flowchart of a real-time method for generating an interleaved image for a lenticular display based on dynamically captured texture information and a pre-generated lenticular to UV map, according to some embodiments. The real-time method of FIG. 10 may, for example, be performed during real-time use of a device such as an HMD as illustrated in FIG. 2.

As indicated at 1000, texture information for a user's face may be obtained, for example from image data captured by one or more user-facing sensors of a device as illustrated in FIG. 2. The image data may, for example, include 2D color image(s) captured by camera(s). The data captured by the user-facing sensors may be processed to generate 2D texture information (e.g., coloring and shading of the object). As indicated at 1010, a lenticular to UV map that was generated and stored in an offline method as illustrated in FIG. 9 is obtained from memory of the device. The lenticular to UV map represents a fixed mesh of the object to be imaged. As indicated at 1020, a composite component performs a composite process that generates a lenticular image by sampling pixels from the texture information using the lenticular to UV map. In some embodiments, the lenticular image may include information for N viewing angles of the lenticular display. Alternatively, the device may track locations of person(s) in the environment, and the composite process may only include information for the viewing angles at which people are currently located in the lenticular image. As indicated at 1030, the lenticular image may be displayed on the lenticular display of the device. As indicated by the arrow returning from element 1030 to element 1000, the real-time method may operate at a frame rate, for example 60 frames per second, to capture dynamic texture data, composite lenticular images of the object using the fixed mesh data and the dynamic texture data, and display the lenticular images of the object.

### Device calibration

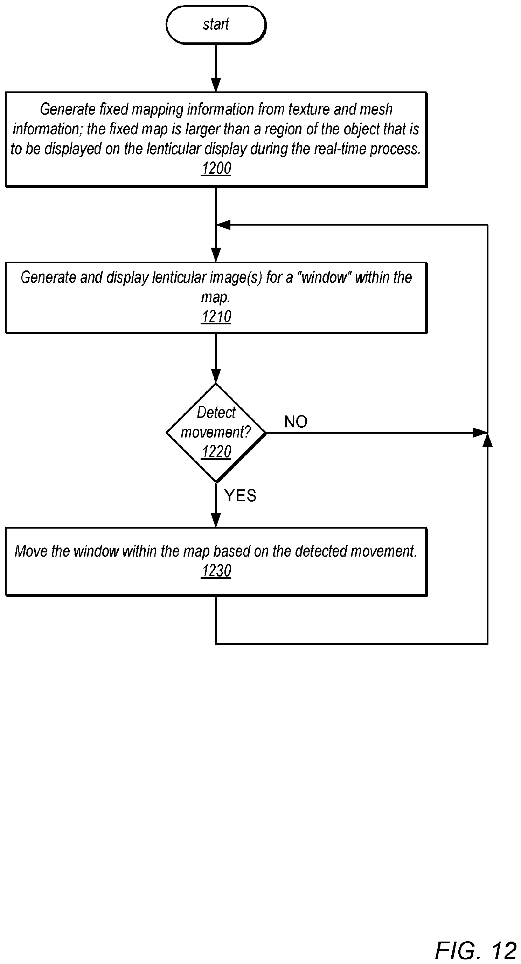

The offline method of FIGS. 5 and 9 may, for example, be performed in a calibration process before real-time use of a device such as an HMD. However, the device may move during use, which may result in misalignment of the fixed mapping and the lenticular display. In some embodiments, the offline method of FIGS. 5 and 9 may be repeated if movement of the device (e.g., an HMD) is detected during real-time use as described in reference to FIG. 11. Alternatively, as illustrated in FIG. 12, in some embodiments, to address this misalignment, a lenticular to UV map of the object (e.g., a user's face) may be generated during the offline process that is larger than a region or "window" of the object that is displayed on the lenticular display during the real-time process. If movement of the HMD is detected during the real-time process, the window may be moved within the lenticular to UV map based on the detected movement

FIG. 11 is a flowchart of a method for responding to detected movement of an HMD, according to some embodiments. As indicated at 1100, fixed mapping information may be generated in an offline process from texture and mesh information, for example as illustrated in FIGS. 5 and 9. As indicated at 1110, a real-time process as illustrated in FIGS. 6, 7, and 10 may execute on a device such as an HMD to generate and display lenticular image(s) based on the fixed mapping information generated during the offline process and dynamically captured texture information. The device may move during use, which may result in misalignment of the fixed mapping and the lenticular display. At 1120, if movement of the device is detected (e.g., by motion/position sensors on the device), the offline method of FIGS. 5 and 9 may be executed to recalculate the fixed mapping information as illustrated at 1130. The real-time process may then continue with the recalculated mapping information.

FIG. 12 is a flowchart of an alternative method for responding to detected movement of an HMD, according to some embodiments. As indicated at 1200, fixed mapping information may be generated in an offline process from texture and mesh information, for example as illustrated in FIGS. 5 and 9. The fixed map is larger than a region of the object that is to be displayed on the lenticular display during the real-time process. As indicated at 1210, a real-time process as illustrated in FIGS. 6, 7, and 10 may execute on a device such as an HMD to generate and display lenticular image(s) for a "window" within the fixed map based on the fixed mapping information generated during the offline process and dynamically captured texture information. The device may move during use, which may result in misalignment of the fixed mapping and the lenticular display. At 1220, if movement of the device is detected (e.g., by motion/position sensors on the device), the window may be moved within the fixed map based on the detected movement as illustrated at 1230. The real-time process may then continue to generate lenticular image(s) for the shifted window within the fixed mapping information.

### Interpolation

In some embodiments, to further reduce computation and power consumption during real-time processing, instead of compositing a lenticular image for N viewpoints from dynamic texture information, a lenticular image may be composited using a selected subset of the N viewpoints (e.g. three viewpoints including a left, center, and right viewpoint), and an interpolation method may be used to generate pixels for the viewpoints in between the selected subset of viewpoints.

The methods described herein may be implemented in software, hardware, or a combination thereof, in different embodiments. In addition, the order of the blocks of the methods may be changed, and various elements may be added, reordered, combined, omitted, modified, etc. Various modifications and changes may be made as would be obvious to a person skilled in the art having the benefit of this disclosure. The various embodiments described herein are meant to be illustrative and not limiting. Many variations, modifications, additions, and improvements are possible. Accordingly, plural instances may be provided for components described herein as a single instance. Boundaries between various components, operations and data stores are somewhat arbitrary, and particular operations are illustrated in the context of specific illustrative configurations. Other allocations of functionality are envisioned and may fall within the scope of claims that follow. Finally, structures and functionality presented as discrete components in the example configurations may be implemented as a combined structure or component. These and other variations, modifications, additions, and improvements may fall within the scope of embodiments as defined in the claims that follow.

Before going on to set out the claims however, we first provide the following list of clauses, which point out some features of some embodiments of the invention:
Clause 1. A device, comprising:
   a lenticular display;
   one or more sensors;
   memory; and
   a controller comprising one or more processors configured to:
      generate fixed mapping information for an object from texture and mesh information for the object obtained from the one or more sensors;
      store the fixed mapping information to the memory;
      generate a plurality of lenticular images from texture information for the object obtained from at least one of the one or more sensors and the fixed mapping information; and
      provide the lenticular images to the lenticular display.
Clause 2. The device as recited in clause 1, wherein the lenticular display comprises:
   a display panel; and
   a lenticular lens attached to a surface of the display panel.
Clause 3. The device as recited in clause 2, wherein the display panel is one of a liquid crystal display (LCD), an organic light-emitting diode (OLED) technology display, a DLP (digital light processing) technology display, or an LCoS (liquid crystal on silicon) technology display.
Clause 4. The device as recited in clause 2, wherein the lenticular display displays individual ones of the lenticular images on the display panel, and wherein the lenticular lens is configured to provide three-dimensional virtual views of the object displayed on the display panel from multiple different viewing angles.
Clause 5. The device as recited in clause 1, wherein, to generate fixed mapping information for an object from texture and mesh information for the object, the controller is configured to:
   render UV map views for multiple viewing angles of the lenticular display from the obtained texture and mesh information;
   generate view maps from a ray tracing model and calibration data for the lenticular display;
      and
   generate a lenticular to UV map for the object from the UV map views and the view maps;
   wherein the fixed mapping information includes the lenticular to UV map.
Clause 6. The device as recited in clause 1, wherein, to generate a plurality of lenticular images from texture information for the object obtained from at least one of the one or more sensors and the fixed mapping information, the controller is configured to, for each lenticular image to be generated:
   obtain current texture information for the object from the at least one sensor; and
   generate the lenticular image by sampling pixels from the current texture information based on the fixed mapping information.
Clause 7. The device as recited in clause 6, wherein the fixed mapping information includes a lenticular to UV map that maps subpixels in the current texture information to subpixels of the lenticular display.
Clause 8. The device as recited in clause 7, wherein the controller is further configured to:
   detect one or more persons in front of the lenticular display; and
   generate the lenticular image by sampling only subpixels from the current texture information that correspond to viewing angles of the detected one or more persons.
Clause 9. The device as recited in clause 1, wherein the device is a head-mounted device (HMD) of a computer-generated reality (CGR) system, and wherein the object is at least a portion of a face of a user of the HMD.
Clause 10. The device as recited in clause 9, wherein the controller is further configured to:
   detect movement of the HMD on the user's head; and
   in response to the movement, regenerate fixed mapping information for the user's face from texture and mesh information for the user's face obtained from the one or more sensors.
Clause 11. The device as recited in clause 9, wherein the controller is further configured to:
   detect movement of the HMD on the user's head; and
   move a window within the fixed mapping information based on the detected movement.
Clause 12. A method, comprising:
   performing, by one or more processors of a device in an off-line process:
      generating fixed mapping information for an object from texture and mesh information for the object obtained from one or more sensors;
      storing the fixed mapping information to the memory;
   performing, by the one or more processors of the device in a real-time process:
      generating a plurality of lenticular images from texture information for the object obtained from at least one of the one or more sensors and the fixed mapping information; and
      providing the lenticular images to a lenticular display.
Clause 13. The method as recited in clause 12, wherein the lenticular display includes a display panel and a lenticular lens attached to a surface of the display panel, the method further comprising displaying, by the lenticular display, individual ones of the lenticular images on the display panel, wherein the lenticular lens is configured to provide three-dimensional virtual views of the object displayed on the display panel from multiple different viewing angles.
Clause 14. The method as recited in clause 12, wherein generating fixed mapping information for an object from texture and mesh information for the object obtained from one or more sensors comprises:
   rendering UV map views for multiple viewing angles of the lenticular display from the obtained texture and mesh information;
   generating view maps from a ray tracing model and calibration data for the lenticular display; and
   generating a lenticular to UV map for the object from the UV map views and the view maps;
   wherein the fixed mapping information includes the lenticular to UV map.
Clause 15. The method as recited in clause 12, wherein generating a plurality of lenticular images from texture information for the object obtained from at least one of the one or more sensors and the fixed mapping information comprises, for each lenticular image to be generated:
   obtaining current texture information for the object from the at least one sensor; and
   generating the lenticular image by sampling pixels from the current texture information based on the fixed mapping information.
Clause 16. The method as recited in clause 15, wherein the fixed mapping information includes a lenticular to UV map that maps subpixels in the current texture information to subpixels of the lenticular display.
Clause 17. The method as recited in clause 16, further comprising:
   detecting one or more persons in front of the lenticular display; and
   generating the lenticular image by sampling only subpixels from the current texture information that correspond to viewing angles of the detected one or more persons.
Clause 18. The method as recited in clause 12, wherein the device is a head-mounted device (HMD) of a computer-generated reality (CGR) system, and, wherein the object is at least a portion of a face of a user of the HMD.
Clause 19. The method as recited in clause 18, further comprising:
   detecting movement of the HMD on a user's head; and
   in response to the movement, regenerating the fixed mapping information for the user's face from texture and mesh information for the user's face obtained from the one or more sensors.
Clause 20. The method as recited in clause 18, further comprising:
   detecting movement of the HMD on a user's head; and
   moving a window within the fixed mapping information based on the detected movement.

## Claims

1. A device, comprising:
a lenticular display;
one or more sensors;
memory; and
a controller comprising one or more processors configured to:
generate fixed mapping information for an object from texture and mesh information for the object obtained from the one or more sensors;
store the fixed mapping information to the memory;
generate a plurality of lenticular images from texture information for the object obtained from at least one of the one or more sensors and the fixed mapping information; and
provide the lenticular images to the lenticular display.

2. The device as recited in claim 1, wherein the lenticular display comprises:
a display panel; and
a lenticular lens attached to a surface of the display panel.

3. The device as recited in claim 2, wherein the display panel is one of a liquid crystal display (LCD), an organic light-emitting diode (OLED) technology display, a DLP (digital light processing) technology display, or an LCoS (liquid crystal on silicon) technology display.

4. The device as recited in claim 2 or claim 3, wherein the lenticular display displays individual ones of the lenticular images on the display panel, and wherein the lenticular lens is configured to provide three-dimensional virtual views of the object displayed on the display panel from multiple different viewing angles.

5. The device as recited in any one of claims 1-4, wherein, to generate fixed mapping information for an object from texture and mesh information for the object, the controller is configured to:
render UV map views for multiple viewing angles of the lenticular display from the obtained texture and mesh information;
generate view maps from a ray tracing model and calibration data for the lenticular display; and
generate a lenticular to UV map for the object from the UV map views and the view maps;
wherein the fixed mapping information includes the lenticular to UV map.

6. The device as recited in any one of claims 1-5, wherein, to generate a plurality of lenticular images from texture information for the object obtained from at least one of the one or more sensors and the fixed mapping information, the controller is configured to, for each lenticular image to be generated:
obtain current texture information for the object from the at least one sensor; and
generate the lenticular image by sampling pixels from the current texture information based on the fixed mapping information.

7. The device as recited in claim 6, wherein the fixed mapping information includes a lenticular to UV map that maps subpixels in the current texture information to subpixels of the lenticular display.

8. The device as recited in claim 7, wherein the controller is further configured to:
detect one or more persons in front of the lenticular display; and
generate the lenticular image by sampling only subpixels from the current texture information that correspond to viewing angles of the detected one or more persons.

9. The device as recited in any one of claims 1-8, wherein the device is a head-mounted device (HMD) of a computer-generated reality (CGR) system, and wherein the object is at least a portion of a face of a user of the HMD.

10. The device as recited in claim 9, wherein the controller is further configured to:
detect movement of the HMD on the user's head; and
in response to the movement, regenerate fixed mapping information for the user's face from texture and mesh information for the user's face obtained from the one or more sensors.

11. The device as recited in claim 9, wherein the controller is further configured to:
detect movement of the HMD on the user's head; and
move a window within the fixed mapping information based on the detected movement.

12. A method, comprising:
performing, by one or more processors of a device in an off-line process:
generating fixed mapping information for an object from texture and mesh information for the object obtained from one or more sensors;
storing the fixed mapping information to the memory;
performing, by the one or more processors of the device in a real-time process:
generating a plurality of lenticular images from texture information for the object obtained from at least one of the one or more sensors and the fixed mapping information; and
providing the lenticular images to a lenticular display.

13. The method as recited in claim 12, wherein generating fixed mapping information for an object from texture and mesh information for the object obtained from one or more sensors comprises:
rendering UV map views for multiple viewing angles of the lenticular display from the obtained texture and mesh information;
generating view maps from a ray tracing model and calibration data for the lenticular display; and
generating a lenticular to UV map for the object from the UV map views and the view maps;
wherein the fixed mapping information includes the lenticular to UV map.

14. The method as recited in claim 12 or claim 13, wherein generating a plurality of lenticular images from texture information for the object obtained from at least one of the one or more sensors and the fixed mapping information comprises, for each lenticular image to be generated:
obtaining current texture information for the object from the at least one sensor; and
generating the lenticular image by sampling pixels from the current texture information based on the fixed mapping information.

15. The method as recited in any one of claims 12-14, wherein the device is a head-mounted device (HMD) of a computer-generated reality (CGR) system, and, wherein the object is at least a portion of a face of a user of the HMD, the method further comprising:
detecting movement of the HMD on a user's head; and
in response to the movement: regenerating the fixed mapping information for the user's face from texture and mesh information for the user's face obtained from the one or more sensors, or moving a window within the fixed mapping information based on the detected movement.
